(19) Europäisches Patentamt
European Patent Office
Office européen des brevets

(11) EP 4 041 516 B1

(12) **FASCICULE DE BREVET EUROPEEN**

(45) Date de publication et mention de la délivrance du brevet:
**18.02.2026 Bulletin 2026/08**

(21) Numéro de dépôt: **20793756.6**

(22) Date de dépôt: **07.10.2020**

(51) Classification Internationale des Brevets (IPC):
***B29B 9/12*** (2006.01) ***B29C 64/153*** (2017.01)
***B33Y 70/00*** (2020.01) ***C08K 3/013*** (2018.01)
***C08K 3/26*** (2006.01) ***C08K 3/34*** (2006.01)
***C08K 3/36*** (2006.01) ***C08J 3/12*** (2006.01)
***C08G 65/40*** (2006.01) ***B29B 7/00*** (2006.01)
***B29B 7/90*** (2006.01)

(52) Classification Coopérative des Brevets (CPC):
(C-Sets disponibles)
**B29B 7/90; B29B 7/007; B29B 7/726; B29C 64/153; B33Y 70/00; C08G 65/4012; C08J 3/203; C08K 3/013;** B29B 9/12; C08G 2650/40; C08J 2371/00; C08K 3/26; C08K 3/34; C08K 3/346; C08K 3/36; (Cont.)

(86) Numéro de dépôt international:
**PCT/FR2020/051759**

(87) Numéro de publication internationale:
**WO 2021/069833 (15.04.2021 Gazette 2021/15)**

(54) **POUDRE DE POLY-ARYL-ÉTHER-CÉTONE(S) CHARGÉE, PROCÉDÉ DE FABRICATION ET UTILISATION CORRESPONDANTS**

GEFÜLLTES POLYARYLETHERKETON-PULVER, VERFAHREN ZUM HERSTELLEN DAVON UND VERWENDUNG DAVON

FILLED POLYARYLETHERKETONE POWDER, MANUFACTURING METHOD THEREFOR AND USE THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.10.2019 FR 1911127**

(43) Date de publication de la demande:
**17.08.2022 Bulletin 2022/33**

(73) Titulaire: **ARKEMA FRANCE**
**92800 Puteaux (FR)**

(72) Inventeurs:
- **BRULE, Benoît**
  **27470 SERQUIGNY (FR)**
- **BUSSI, Philippe**
  **92705 COLOMBES CEDEX (FR)**

(74) Mandataire: **Arkema Patent**
**Arkema France**
**DRD-DPI**
**51, Esplanade du Général de Gaulle**
**CS 10478**
**92907 Paris La Défense Cedex (FR)**

(56) Documents cités:
**EP-A1- 3 272 788**
**WO-A1-2015/092272**
**US-A1- 2005 207 931**
**US-A1- 2006 134 419**

Il est rappelé que: Dans un délai de neuf mois à compter de la publication de la mention de la délivrance du brevet européen au Bulletin européen des brevets, toute personne peut faire opposition à ce brevet auprès de l’Office européen des brevets, conformément au règlement d’exécution. L’opposition n’est réputée formée qu’après le paiement de la taxe d’opposition. (Art. 99(1) Convention sur le brevet européen).

(52) Classification Coopérative des Brevets (CPC):
(Cont.)C08K 2201/003

C-Sets
**C08K 3/013, C08L 71/00**

## Description

### Domaine technique

L'invention concerne le domaine des poudres de poly-aryl-éther-cétone(s).

Plus particulièrement, l'invention concerne une poudre chargée de poly-aryl-éther-cétone(s), un procédé de fabrication de la poudre ainsi que son utilisation dans un procédé de fabrication d'objets tridimensionnels, notamment dans un procédé de frittage de poudre provoqué par un rayonnement électromagnétique.

### Art antérieur

Les poly-aryl-éther-cétones (PAEKs) sont des polymères techniques haute performance bien connus. Ils peuvent être utilisés pour des applications contraignantes en température et/ou en contraintes mécaniques, voire chimiques. Ils peuvent également être utilisés pour des applications demandant une excellente résistance au feu et peu d'émission de fumées ou de gaz toxiques. Ils présentent enfin une bonne biocompatibilité. On retrouve ces polymères dans des domaines aussi variés que l'aéronautique et le spatial, les forages off-shore, l'automobile, le ferroviaire, la marine, l'éolien, le sport, le bâtiment, l'électronique ou encore les implants médicaux. Ils peuvent être mis en œuvre par toutes les technologies de mise en œuvre des thermoplastiques, tels que le moulage, la compression, l'extrusion, le filage, le poudrage ou encore le prototypage par frittage.

Les procédés de construction d'objets couche-à-couche par frittage provoqués par rayonnement(s) électromagnétique(s), notamment par rayonnement infra-rouge et rayonnement laser, sont bien connus de l'Homme du Métier. En référence à la Figure 1, le dispositif 1 de frittage laser comprend une enceinte de frittage 10 dans laquelle sont disposés un bac d'alimentation 40 contenant la poudre à fritter, une plaque horizontale 30 permettant de supporter l'objet tridimensionnel 80 en construction et un laser 20. La poudre est prélevée du bac d'alimentation 40 et déposée sur la plaque horizontale 30, formant une fine couche 50 de poudre constitutive de l'objet tridimensionnel 80 en construction.

Un rouleau compacteur/racleur (non représenté) permet d'assurer la bonne uniformité de la couche de poudre 50. La couche de poudre 50, en construction, est chauffée grâce à un rayonnement infra-rouge 100 pour atteindre une température sensiblement uniforme et égale à une température de construction Tc prédéterminée. Dans les procédés de construction traditionnels de frittage de poudres à base de PAEK(s), Tc est généralement d'environ 20°C inférieur à la température de fusion de la poudre. Dans certains cas Tc peut même être inférieure. L'énergie nécessaire à fritter les particules de poudre en différents points de la couche de poudre 50 est ensuite apportée par un rayonnement laser 200 du laser 20 mobile dans le plan (xy), selon une géométrie correspondant à celle de l'objet. La poudre fondue se re-solidifie formant une partie frittée 55 alors que le reste de la couche 50 reste sous forme de poudre non frittée 56. Plusieurs passages de rayonnement laser 200 peuvent être nécessaires dans certains cas. Ensuite, la plaque horizontale 30 est abaissée selon l'axe (z) d'une distance correspondant à l'épaisseur d'une couche de poudre, et une nouvelle couche est déposée. Le laser 20 apporte l'énergie nécessaire pour fritter les particules de poudre selon une géométrie correspondant à cette nouvelle tranche de l'objet et ainsi de suite. La procédure est répétée jusqu'à ce que l'on ait fabriqué l'objet 80. Une fois l'objet 80 terminé, il est retiré de la plaque horizontale 30 et la poudre non frittée 56 peut être tamisée avant d'être renvoyée, le cas échéant, dans le bac d'alimentation 40 pour servir de poudre recyclée.

Afin d'améliorer les propriétés mécaniques, notamment afin d'augmenter le module d'élasticité, des objets fabriqués à partir de poudre de poly-aryl-éther-cétone(s), notamment des objets fabriqués par frittage provoqué par rayonnement(s) électromagnétique(s), il est connu d'ajouter à la poudre de poly-aryl-éther-cétone(s) des fibres de carbone.

Les fibres de carbone peuvent être mélangées à des particules de poly-aryl-éther-cétone(s) à sec (*dry-blend*). Par exemple, US2018/0201783 décrit une composition issue d'un mélange à sec de particules de poly-éther-cétone-cétone avec des fibres de carbone dont la longueur médiane est supérieure strictement au diamètre moyen des particules. Plus précisément, le mélange mis en œuvre comprend 85 % en poids de particules de poly-éther-cétone-cétone ayant un diamètre médian de 61,34 μm, mesuré à l'aide d'un compteur de particules Coulter Counter selon la norme ISO 13319, et 15% en poids de fibres de carbone de longueur médiane L50 égale à 77 μm et de diamètre approximatif égal 7,1 μm. Le mélange est introduit dans un mélangeur à haute intensité afin d'incorporer partiellement au moins une partie des fibres de carbone dans les particules de poly-éther-cétone-cétone. Le mélange à sec de particules de poly-éther-cétone-cétone avec des fibres de carbone présente comme avantage d'être particulièrement facile à préparer.

Le mélange à sec de fibres de carbone avec des particules de poly-aryl-éther-cétone(s) présente néanmoins plusieurs désavantages.

Un premier désavantage est que les objets tridimensionnels issus du frittage laser de ces poudres ont des propriétés mécaniques anisotropes, c'est-à-dire différentes que l'on se place selon l'axe « Z » selon lequel les différentes couches ont été imprimées ou que l'on se place selon le plan (XY) dans lequel chaque couche a été imprimée. En effet, les fibres de carbone ont tendance à s'aligner selon une direction privilégiée lors du passage du rouleau compacteur/racleur.

Un deuxième désavantage est qu'il n'est pas possible d'utiliser une proportion importante de fibres de carbone dans la poudre au risque d'altérer la bonne coulabilité de cette dernière, une bonne coulabilité étant nécessaire pour une utilisation en frittage laser. En effet, étant donné que les fibres de carbone ne s'incorporent que de manière très difficile aux particules de poly-éther-cétone-cétone, une proportion de fibres de carbone élevées dans la composition entraîne que peu d'entre elles n'arrivent à s'incorporer suffisamment dans les particules de poly-éther-cétone-cétone, ce qui implique qu'une majorité des fibres de carbone restent libres dans la composition, altérant ainsi la coulabilité de la poudre. En outre, le rafraîchissement de la poudre, c'est-à-dire son recyclage au moins en partie, après tamisage, dans une autre construction d'objet par frittage laser n'est pas facilement réalisable à cause des difficultés à conserver un taux constant de fibres de carbone au sein de la poudre de poly-éther-cétone-cétone. La demande US2018/0201783 indique une proportion allant de 5% à 30% en poids de fibres de carbone dans le mélange à sec, sachant qu'à ce jour les mélanges à sec de de particules de poly-éther-cétone-cétone avec des fibres de carbone disponibles sur le marché ont une proportion en fibres de carbone ne dépassant généralement pas les 15% en poids de composition.

Afin que les objets tridimensionnels issus de frittage laser aient des propriétés mécaniques sensiblement isotropes, il est connu des poudres dans lesquelles les fibres de carbone sont incorporées à l'intérieur des particules de poly-aryl-éther-cétone(s). Par exemple, la demande US 2005/0207931 décrit des particules de poly-éther-éther-cétone intégrant des fibres de carbone, le poly-éther-éther-cétone formant une matrice, et les fibres de carbone étant essentiellement incorporées dans la matrice. Le « diamètre moyen D50 » (méthode de mesure non détaillée) est compris entre 20 $\mu$m et 150 $\mu$m. La longueur moyenne des fibres de carbone est également comprise entre 20 et 150 $\mu$m.

La demande US 2005/0207931 décrit trois méthodes pour préparer des particules de thermoplastique incorporant plus de 30% en poids de fibres de carbone (voir variante 3).

La première méthode décrite de fabrication est le séchage par atomisation (*spray-drying*). Cette méthode consiste à mélanger dans une phase liquide, comme l'éthanol ou un mélange eau/éthanol, une micropoudre de thermoplastique ayant un D50 compris entre 3 $\mu$m et 10 $\mu$m, avec des fibres de carbone. La suspension est pulvérisée sur une surface, puis la phase liquide de la suspension est vaporisée ou évaporée afin de former une poudre.

La deuxième méthode consiste à broyer des granulés de thermoplastique ayant une taille de grain initiale de 3 mm, dans lesquels les fibres de carbone sont déjà incorporées. Le broyage a lieu en conditions cryogénique dans un broyeur équipé de disques à broches jusqu'à ce que les particules atteignent la taille souhaitée et soient séparées à l'aide d'un séparateur à air.

La troisième méthode de fabrication est la pulvérisation-fusion (*melt-spraying*). Cette méthode consiste à pulvériser un mélange de fibres de carbone et de thermoplastique fondu pour obtenir des particules de tailles de l'ordre de quelques dizaines de micromètres.

Ces trois méthodes peuvent s'avérer très difficiles à mettre en œuvre, surtout dans le cas où le thermoplastique est un poly-aryl-éther-cétone comme le poly-éther-éther-cétone. Dans le cas où elles peuvent raisonnablement être mise en œuvre avec un poly-aryl-éther-cétone comme thermoplastique, la poudre chargée de poly-aryl-éther-cétone qui serait obtenue aurait un prix de revient très élevé. En particulier, la première méthode semble très difficile à mettre en œuvre du fait de la complexité et du coût important pour obtenir des particules de poly-aryl-éther-cétone de taille de l'ordre de quelques micromètres utilisées dans la poudre de départ. La deuxième méthode semble également compliquée à mettre en œuvre du fait que la présence de fibres de carbone dans les granulés à broyer tend à provoquer une forte abrasion et un vieillissement accéléré du broyeur. De plus, dans la deuxième méthode, la taille des fibres de carbone incorporées aux particules de poly-aryl-éther-cétone est contrôlée par la taille des particules et ne peut généralement pas être supérieure à la taille des particules. Enfin, la troisième méthode est également compliquée à mettre en œuvre car la bonne fabrication de la poudre est soumise à une non-agglomération des particules de la pulvérisation, ce qui se traduit en particulier par une nécessité d'un système de refroidissement extrêmement rapide et précis.

De ce fait, les compositions de poudre comprenant un poly-aryl-éther-cétone, formant une matrice, et des fibres de carbone essentiellement incorporées dans la matrice, ont un coût de revient beaucoup plus élevé que les mélanges à sec de particules de poly-aryl-éther-cétone et de fibres de carbone. En outre, le renforcement obtenu dans les objets tridimensionnels est généralement moindre pour ceux qui ont été obtenus par frittage laser de composition de particules de PAEK incorporant des fibres de carbone en comparaison avec ceux obtenus par frittage laser de mélanges à sec de particules de PAEK et de fibres de carbone. Ceci s'explique notamment par le fait que dans le premier cas la taille des fibres de carbone est généralement contrôlée par la taille des particules, ce qui n'est pas le cas dans le deuxième cas où les fibres de carbone peuvent être bien plus longues.

Ainsi, il existe donc un besoin de développer des poudres chargées de poly-aryl-éther-cétone(s) alternatives permettant d'améliorer les propriétés mécaniques, notamment permettant d'augmenter le module d'élasticité, voire la contrainte à la rupture, des objets fabriqués à partir de ces poudres, notamment des objets fabriqués par frittage provoqué par rayonnement(s) électromagnétique(s).

Il existe également un besoin de développer des procédés optimisés permettant d'obtenir ces poudres chargées.

## Objectifs de l'invention

L'objectif de l'invention est donc de proposer une poudre chargée et un procédé de fabrication de cette poudre, qui pallient au moins certains inconvénients de l'art antérieur.

Un objectif de l'invention est notamment de proposer une poudre chargée à base de poly-aryl-éther-cétone(s) conduisant à des objets ayant de meilleures propriétés mécaniques, notamment un module d'élasticité et une contrainte à la rupture plus élevés, qu'une poudre non chargée à base de poly-aryl-éther-cétone(s).

Un autre objectif de l'invention est de proposer une poudre chargée à base de poly-aryl-éther-cétone(s) conduisant à des objets dont les propriétés mécaniques sont sensiblement isotropes.

Selon certains modes de réalisation, un objectif est de proposer une poudre chargée qui ait un relativement faible coût de revient.

Selon certains modes de réalisation, un objectif est de proposer une poudre qui conduise à des objets qui ont des propriétés mécaniques similaires voire améliorées par rapport à des poudres à base de poly-aryl-éther-cétone(s) comprenant des fibres de carbone (mélange à sec avec les fibres ou fibres incorporées).

Selon certains modes de réalisation, un objectif est de proposer une poudre qui puisse être utilisée dans un procédé de frittage de poudre par rayonnement(s) électromagnétique(s) et qui puisse, le cas échéant, être facilement recyclée dans une ou plusieurs construction(s) ultérieure(s).

Un autre objectif de l'invention est également de proposer un procédé de fabrication de la poudre selon l'invention qui soit simple et ait un relativement faible coût de revient.

## Résumé de l'invention

L'invention concerne une poudre ayant une distribution de taille de particules, pondérée par le volume, mesurée par diffraction laser, selon la norme ISO 13320 : 2009, avec un diamètre médian D50 allant de 40 à 120 micromètres.

La poudre comprend au moins un poly-aryl-éther-cétone (PAEK) et au moins une charge, dans laquelle :

- ledit au moins un poly-aryl-éther-cétone forme une matrice incorporant ladite au moins une charge, et,
- ladite charge a une distribution de diamètres équivalents sphériques de Stokes, mesurée par rayons X avec sédimentation par gravité dans un liquide, selon la norme ISO 13317-3 : 2001, avec un diamètre médian d'50 inférieur ou égal à 5 micromètres,.

On entend par « D50 » signifier la valeur du diamètre des particules de poudre pour que la fonction cumulative de distribution des diamètres des particules, pondérée par le volume, soit égale à 50%. « D50 » est mesuré par diffraction laser selon la norme ISO 13320 : 2009, par exemple sur un diffractomètre Malvern Mastersizer 2000®.

On entend par « D'50 » signifier la valeur du diamètre des particules de charge pour que la fonction cumulative de distribution des diamètres des particules, pondérée par volume, soit égale à 50%. « D'50 » est mesuré par diffraction laser selon la norme ISO 13320 : 2009, par exemple sur un diffractomètre Malvern Mastersizer 2000®.

On entend par « d'50 » signifier la valeur du diamètre des particules de charge pour que la fonction cumulative de distribution des diamètres équivalents sphériques de Stokes soit égale à 50%. « d'50 » est mesuré par sédimentation par gravité dans un liquide selon la norme ISO 13317-3 : 2001, par exemple dans un appareil Sedigraph III Plus®.

La norme ISO 9276 est utilisée pour la modélisation mathématique et statistique permettant de calculer la distribution de tailles de particules.

Pour des particules de charge de forme sensiblement sphérique, D'50 et d'50 sont sensiblement égaux. Pour des particules de charge de forme non-sphérique, notamment pour des particules de forme aplatie et/ou de forme allongée, pouvant être décrites par une longueur caractéristique et une épaisseur caractéristique, on définit un coefficient de forme C par la formule suivante :

$$C = \frac{D'50 - d'50}{d'50}$$

On entend par "axe Z" signifier la direction dans laquelle les différentes couches sont imprimées dans un procédé d'impression couche-à-couche par frittage de poudre par rayonnement(s) électromagnétique(s). A contrario, on entend par (XY) signifier le plan dans lequel chaque couche est imprimée.

Les inventeurs de la présente invention ont remarqué, de manière surprenante, que la poudre telle que revendiquée permettait de fabriquer des objets tridimensionnels par un procédé de construction d'objets couche-à-couche par frittage provoqué par un rayonnement électromagnétique, possédant des propriétés mécaniques supérieures à ceux fabriqués à partir de poudre à base de poly-aryl-éther-cétone(s) non chargée. En effet, la poudre comprenant

du/des PAEK(s) et incorporant une charge dont le d'50 est suffisamment inférieur au D50 de la poudre permet notamment d'obtenir des objets tridimensionnels par frittage laser ayant une rigidité supérieure et/ou une résistance à la rupture supérieure. Les inventeurs ont aussi pu mettre en évidence que, dans certains modes de réalisation, la poudre selon l'invention permettait de fabriquer des objets tridimensionnels par un procédé de construction d'objets couche-à-couche par frittage provoqué par un rayonnement électromagnétique, possédant des propriétés mécaniques (notamment résistance à la rupture et allongement à la rupture) d'ordre similaire, voire supérieures, que celles des objets obtenus à partir de poudre à base de poly-aryl-éther-cétone(s) et de fibres de carbone (mélange des fibres à sec ou incorporation des fibres au sein d'une matrice).

En outre, les propriétés mécaniques des objets tridimensionnels fabriqués à partir de la poudre selon l'invention sont isotropes ou quasi-isotropes, c'est-à-dire équivalentes dans toutes les directions de l'espace.

Selon certains modes de réalisation, la charge a une distribution de taille de particules avec un diamètre médian d'50 inférieure ou égale à 2,5 micromètres. Selon certains modes de réalisation, le rapport massique de la charge sur ledit au moins un PAEK est de 1:9 à 1:1.

Pour un rapport massique inférieur à 1:9, le gain des propriétés mécaniques, notamment l'augmentation de la valeur du module d'élasticité, d'un objet fabriqué à partir de la poudre, n'est généralement pas substantiel par rapport à un objet fabriqué à partir de poudre non chargée. Pour un rapport massique supérieur à 1:1, l'objet fabriqué à partir de la poudre est généralement trop cassant. Préférentiellement, le rapport massique de la charge sur ledit au moins un PAEK est de 1:4 à 3:7.

Selon certains modes de réalisation, ledit au moins un PAEK et ladite au moins une charge représentent ensemble au moins 60%, ou au moins 70%, ou au moins 80%, ou au moins 85%, ou au moins 90%, ou au moins 92.5%, ou au moins 95%, ou au moins 97.5%, ou au moins 98%, ou au moins 98.5%, ou au moins 99% ou au moins 99.5%, ou 100% du poids total de la poudre.

Selon certains modes de réalisation, le PAEK est un copolymère statistique de poly-éther-cétone-cétone (PEKK), essentiellement constitué de, préférentiellement constitué de, un motif téréphtalique et un motif isophtalique, le motif téréphtalique (T) ayant pour formule :

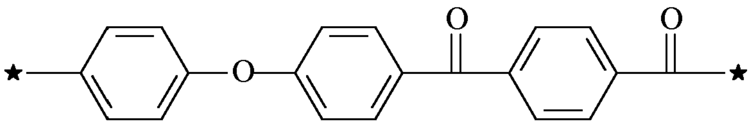

;

le motif isophtalique (I) ayant pour formule :

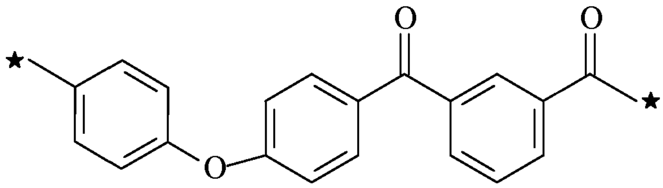

.

Selon certains modes de réalisation, le pourcentage massique en motif téréphtalique par rapport à la somme des motifs téréphtalique et isophtalique est de 55 à 65%. Préférentiellement le pourcentage massique en motif téréphtalique par rapport à la somme des motifs téréphtalique et isophtalique est d'environ 60%. Selon certains modes de réalisation ledit au moins un PAEK est un copolymère, essentiellement constitué de, préférentiellement constitué de :

- motif(s) de formule : -Ph-O-Ph-O-Ph-C(O)- et,
- motif(s) de formule : -Ph-O-Ph-Ph-O-Ph-C(O)-,

dans lesquelles Ph représente un groupement phénylène et -C(O)- un groupement carbonyle, chacun des phénylènes pouvant indépendamment être de type ortho, méta ou para, préférentiellement de type méta ou para.

**[0041]** Selon certains modes de réalisation, la charge est une charge minérale. Ladite charge peut préférentiellement être choisie dans le groupe constitué de : carbonate de calcium, silice, talc, wollastonite, mica, kaolin, et leur mélange. De manière davantage préférée, ladite charge est un talc. Le talc a pour avantage de présenter un faible coût de revient et de procurer des propriétés de renfort intéressantes pour un objet obtenu à partir d'une poudre selon l'invention.

Selon certains modes de réalisation, ladite charge a un coefficient de forme C supérieur ou égal à 2, ledit coefficient de forme C étant défini par la formule suivante :

$$C = \frac{D'50 - d'50}{d'50} ;$$

dans laquelle, D'50 désigne le diamètre médian des particules de charge, pondéré en volume et mesuré selon la norme ISO 13320 : 2009 et,
dans laquelle, d'50 désigne le diamètre équivalent sphérique de Stokes médian des particules de charge, mesuré par rayons X avec sédimentation par gravité dans un liquide, selon la norme ISO 13317-3 : 2001.

La présente invention concerne également un procédé de fabrication de poudre comprenant les étapes constituées de :

- la fourniture d'au moins un poly-aryl-éther-cétone (PAEK) et la fourniture d'au moins une charge, ladite au moins une charge ayant une distribution de diamètres équivalents sphériques de Stokes, mesurée par rayons X avec sédimentation par gravité dans un liquide, selon la norme ISO 13317-3 : 2001, avec un diamètre médian d'50 inférieur ou égal à 5 micromètres;
- l'extrusion-granulation dudit au moins un poly-aryl-éther-cétone (PAEK) avec de ladite au moins une charge afin de former des granulés ; et,
- le broyage des granulés pour obtenir une poudre ayant une distribution de tailles de particules, pondérée par le volume, mesurée par diffraction laser, selon la norme ISO 13320 : 2009, avec un diamètre médian D50 allant de 40 à 120 micromètres.

Les inventeurs de la présente invention ont remarqué que, de manière surprenante, le broyage de granulés à base de PAEK(s) incorporant une charge ayant un d'50 inférieur ou égal à 5 micromètres, permettait de faciliter le broyage en comparaison avec des granulés à base de PAEK(s) incorporant des fibres de carbone. La sélection d'une charge ayant un d'50 inférieur ou égal à 5 micromètres permet notamment d'obtenir facilement des poudres ayant un D50 allant de 40 à 120 micromètres. Le temps de broyage est donc court. En outre, les granulés à base de PAEK(s) incorporant une charge ayant un d'50 inférieur ou égal à 5 micromètres sont généralement beaucoup moins abrasifs lors du broyage que les granulés à base de PAEK(s) incorporant des fibres de carbone de l'art antérieur. Le broyeur n'est donc pas soumis à une abrasion excessive. Selon certains modes de réalisation, le procédé comprend en outre un traitement thermique des granulés avant l'étape de broyage pour permettre la cristallisation, au moins partielle, dudit au moins PAEK de la poudre.

La présente invention concerne également un procédé de construction d'objets couche-à-couche par frittage provoqué par rayonnement(s) électromagnétique(s), dans lequel une poudre selon l'invention est utilisée. Autrement dit, l'invention concerne également l'utilisation de la poudre ci-dessus décrite dans un procédé de construction d'objets couche-à-couche par frittage provoqué par au moins un rayonnement électromagnétique.

Enfin, la présente invention concerne tout objet susceptible d'être obtenue par le procédé de construction d'objets couche-à-couche par frittage provoqué par rayonnement(s) électromagnétique(s) dans lequel la poudre est utilisée. Cet objet est caractérisé en ce qu'il a, selon au moins une direction, un module élastique en traction supérieur ou égal à 7 GPa, sur une éprouvette de type 1BA, à 23°C, avec une vitesse de traverse de 1 mm/min, selon la norme ISO 527-2 : 2012. Les propriétés mécaniques de l'objet étant quasi isotropes, il a généralement un module élastique en traction supérieur ou égal à 7 GPa dans toutes les directions de l'espace, notamment selon le plan (XY) et selon l'axe Z.

## Brève description des figures

La Figure 1 représente schématiquement un dispositif permettant de mettre en œuvre un procédé de construction d'un objet tridimensionnel couche-par-couche par frittage dans lequel la poudre selon l'invention peut être utilisée.

## Description détaillée de l'invention

### Poly-aryl-éther-cétones

Le(s) poly-aryl-éther-cétone(s) (PAEK(s)) des poudres selon l'invention comporte(nt) les motifs de formules suivantes:

$$(\text{-Ar-X-}) \text{ et } (\text{-Ar}_1\text{-Y-}),$$

dans lesquelles :

- Ar et $Ar_1$ désignent chacun un radical aromatique divalent; Ar et $Ar_1$ peuvent être choisis, de préférence, parmi le 1,3-phénylène, 1,4-phénylène, le 4,4'-biphénylène, le 1,4-naphthylène, le 1,5-naphthylène et le 2,6-naphthylène ;
- X désigne un groupe électroattracteur ; il peut être choisi, de préférence, parmi le groupe carbonyle et le groupe sulfonyle,
- Y désigne un groupe choisi parmi un atome d'oxygène, un atome de soufre, un groupe alkylène, tel que $-(CH)_2-$ et isopropylidène.

Dans ces motifs X et Y, au moins 50%, de préférence au moins 70% et plus particulièrement, au moins 80% des groupes X sont un groupe carbonyle, et au moins 50%, de préférence au moins 70% et plus particulièrement au moins 80% des groupes Y représentent un atome d'oxygène.

Selon un mode de réalisation préféré, 100% des groupes X désignent un groupe carbonyle et 100% des groupes Y représentent un atome d'oxygène.

Avantageusement, le(s) PAEK(s) des poudres peut/peuvent être choisi(s) parmi:

- un poly-éther-cétone-cétone, également nommé PEKK ; un PEKK comprend un/des motif(s) de formule : -Ph-O-Ph-C(O)-Ph-C(O)- ;
- un poly-éther-éther-cétone, également nommé PEEK ; un PEEK comprend un/des motif(s) de formule : -Ph-O-Ph-O-Ph-C(O)- ;
- un poly-éther-cétone, également nommé PEK ; un PEK comprend un/des motif(s) de formule : -Ph-O-Ph-C(O)- ;
- un poly-éther-éther-cétone-cétone, également nommé PEEKK ; un PEEKK comprend un/des motif(s) de formule : -Ph-O-Ph-O-Ph-C(O)- Ph-C(O)- ;
- un poly-éther-éther-éther-cétone, également nommé PEEEK ; un PEEEK comprend un/des motif(s) de formule : -Ph-O-Ph-O-Ph-O- Ph-C(O)- ;
- un poly-éther-diphényle-éther-cétone également nommé PEDEK ; un PEDEK comprend un/des motif(s) de formule : un PEDEK comprend un/des motif(s) de formule -Ph-O-Ph-Ph-O-Ph-C(O)- ;
- leur(s) mélange(s) ; et,
- leur(s) copolymère(s).

Dans les formules des motifs de la liste ci-dessus, Ph représente un groupement phénylène et -C(O)- un groupement carbonyle, chacun des phénylènes pouvant indépendamment être de type ortho (1-2), méta (1-3) ou para (1-4), préférentiellement de type méta ou para.

**[0053]** En outre, des défauts, des groupes terminaux et/ou des monomères peuvent être incorporés en très faible quantité dans les polymères tels que décrits dans la liste ci-dessus, sans pour autant avoir une incidence sur leur performance.

Dans certains modes de réalisation, ledit au moins un PAEK est un PEKK. Le PEKK peut être un copolymère essentiellement constitué de, préférentiellement constitué de, motifs de « type I » (de « type isophtalique »), de formule :

(I); et,

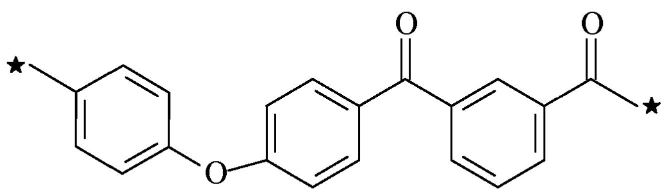

motifs de « type T» (de type « téréphtalique »), de formule :

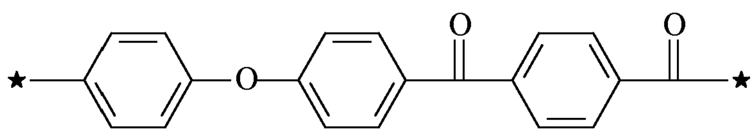

(II).

La proportion massique de motifs T par rapport à la somme des motifs T et I de PEKK(s) peut varier de 0 à 5 % ; ou de 5 à 10 % ; ou de 10 à 15 % ; ou de 15 à 20 % ; ou de 15 à 20 % ; ou de 20 à 25 % ; ou de 25 à 30 % ; ou de 30 à 35 % ; ou de 35 à 40 % ; ou de 40 à 45 % ; ou de 45 à 50 % ; ou de 50 à 55 % ; ou de 55 à 60 % ; ou de 60 à 65 % ; ou de 65 à 70 % ; ou de 70 à 75 % ; ou de 75 à 80 % ; ou de 80 à 85 % ; ou de 85 à 90 % ; ou de 90 à 95 % ; ou de 95 à 100 %. Le choix de la proportion

massique de motifs T par rapport à la somme des motifs T et I est l'un des facteurs qui permet d'ajuster la température de fusion et la vitesse de cristallisation à une température donnée du PEKK. Une proportion massique donnée de motifs T par rapport à la somme des motifs T et I peut être obtenue en ajustant les concentrations respectives des réactifs lors de la polymérisation, de manière connue en soi.

Selon des modes de réalisation avantageux, la somme des motifs téréphtalique et isophtalique dans le PEKK est de 55 à 65% ; préférentiellement le pourcentage massique en motif téréphtalique par rapport à la somme des motifs téréphtalique et isophtalique est d'environ 60%.

Dans certains modes de réalisation, ledit au moins un PAEK est un copolymère de PEEK-PEDEK. Le copolymère de PEEK-PEDEK peut être essentiellement constitué de, préférentiellement constitué de, motifs de formule :

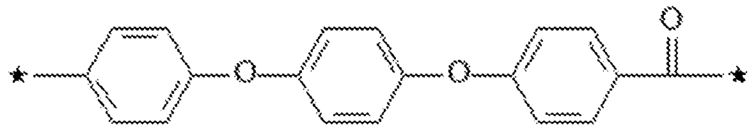

(III) ;

et,
motifs de formule :

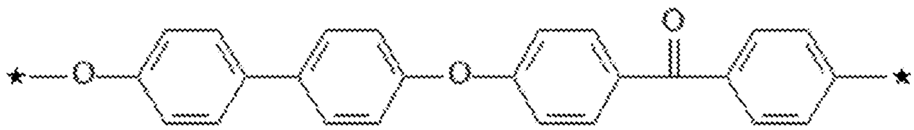

(IV).

La proportion molaire de motif (III) par rapport à la somme des motifs (III) et (IV) de PEEK-PEDEK(s) peut varier de 0 à 5 % ; ou de 5 à 10 % ; ou de 10 à 15 % ; ou de 15 à 20 % ; ou de 15 à 20 % ; ou de 20 à 25 % ; ou de 25 à 30 % ; ou de 30 à 35 % ; ou de 35 à 40 % ; ou de 40 à 45 % ; ou de 45 à 50 % ; ou de 50 à 55 % ; ou de 55 à 60 % ; ou de 60 à 65 % ; ou de 65 à 70 % ; ou de 70 à 75 % ; ou de 75 à 80 % ; ou de 80 à 85 % ; ou de 85 à 90 % ; ou de 90 à 95 % ; ou de 95 à 100 %. Le choix de la proportion molaire de motif (III) par rapport à la somme des motifs (III) et (IV) est l'un des facteurs qui permet d'ajuster la température de fusion et la vitesse de cristallisation à une température donnée du PEEK-PEDEK. Une proportion molaire donnée de motif (III) par rapport à la somme des motifs (III) et (IV) peut être obtenue en ajustant les concentrations respectives des réactifs lors de la polymérisation, de manière connue en soi.

L'indice de viscosité du/des PAEK(s), mesuré en solution à 25°C dans une solution aqueuse d'acide sulfurique à 96% en masse selon la norme ISO 307 : 2019 peut être de 0.65 dl/g à 1.15 dl/g, préférentiellement de 0.70 dl/g à 1.05 dl/g, et de manière davantage préférée de 0.70 dl/g à 0.92 dl/g.

**Charges**

La au moins une charge dans la poudre selon l'invention a une distribution de diamètres équivalents sphériques de Stokes, mesurée par rayons X avec sédimentation par gravité dans un liquide, selon la norme ISO 13317-3 : 2001, avec un diamètre médian d'50 inférieur ou égal à 5 micromètres.

La charge peut notamment avoir une distribution de tailles de particules avec un diamètre médian d'50 inférieur ou égal à 2,5 micromètres. Dans certains cas, la charge peut avoir un diamètre médian d'50 inférieur ou égal à 2 micromètres, ou inférieur ou égal à 1,5 micromètres, ou encore inférieur ou égal à 1 micromètres. Le diamètre médian d'50 de la charge n'est généralement pas inférieur à 0,1 micromètre.

Selon certains modes de réalisation le diamètre médian d'50 est de 0,1 à 5,0 micromètres, ou de 0,25 à 4,0 micromètres, ou encore de 0,5 à 3,0 micromètres. Le diamètre médian d'50 peut notamment être de 0,1 à 0,5 micromètre, ou de 0,5 à 1,0 micromètre, ou de 1,0 à 1,5 micromètres, ou de 1,5 à 2,0 micromètres, ou de 2,0 à 2,5 micromètres, ou de 2,5 à 3,0 micromètres, ou de 3,0 à 3,5 micromètres, ou de 3,5 à 4,0 micromètres, ou de 4,0 à 4,5 micromètres,ou encore de 4,5 à 5,0 micromètres.

Avantageusement, la charge est une charge minérale.

Avantageusement, la charge est une charge renforçante, c'est-à-dire permettant d'améliorer la rigidité, notamment le module élastique en traction, et/ou la résistance à la rupture dudit au moins un poly-aryl-éther-cétone (PAEK).

La charge peut comprendre un carbonate de calcium (calcite).

La charge peut aussi comprendre une silice. La charge peut notamment être de la silice ($SiO_2$) pure, une silice synthétique, un quartz ou une farine de diatomées. La charge peut aussi comprendre un talc.

La charge peut aussi comprendre une wollastonite.

La charge peut finalement comprendre une argile ou un aluminosilicate. La charge peut notamment être un

kaolin, une farine d'ardoise, de la vermiculite ou encore un mica.

La charge est avantageusement un talc. Le talc a pour avantage de présenter un faible coût de revient et de procurer des propriétés de renfort intéressantes pour un objet obtenu à partir d'une poudre selon l'invention.

La charge est préférentiellement non-sphérique. Elle peut être caractérisée par son coefficient de forme C, C étant avantageusement supérieur ou égal à 2. Le coefficient de forme C n'est généralement pas supérieur à 20.

**Procédé de fabrication de poudres**

Dans le procédé de fabrication de poudres selon l'invention, le(s) poly-aryl-éther-cétone(s) et la/les charge(s) sont mélangés puis extrudés.

Selon un premier mode de réalisation, la au moins une charge et le au moins un poly-aryl-éther-cétone sont mélangés à sec et introduits au niveau de la trémie principale de l'extrudeuse.

Selon un deuxième mode de réalisation plus avantageux, le au moins un poly-aryl-éther-cétone est introduit au niveau de la trémie principale alors que la au moins une charge est introduite par gavage latéral et ajoutée dans le poly-aryl-éther-cétone fondu. Ceci a pour avantage d'empêcher que la/les charges(s) ne s'abîment trop lors de leur passage dans l'extrudeuse.

Toute extrudeuse adaptée pour l'extrusion de polymères à température de fusion élevée peut être utilisée. L'Homme du Métier est de plus capable d'adapter les conditions d'extrusion en fonction du polymère utilisé. Un exemple d'extrudeuse est une bivis « Labtech » ayant un diamètre de vis de 26mm et rapport L/D de 40. Le mélange extrudé est subdivisé de sorte à former des granulés.

Les granulés sont ensuite optionnellement traités thermiquement de sorte à augmenter la cristallinité du/des poly-aryl-éther-cétone(s). Une cristallinité élevée des granulés permet en effet de faciliter l'étape suivante de broyage. Avantageusement, la fraction du PAEK dans la poudre a une enthalpie de fusion, mesurée en première chauffe et utilisant une vitesse de chauffe à 20°C/min selon la norme ISO 11357-2 : 2013, allant de 20 à 50 J/g(PAEK), préférentiellement allant de 25 à 40 J/g(PAEK).

Le traitement thermique est avantageusement réalisé à une température bien inférieure à la température de fusion de la poudre. Selon une variante dans laquelle la poudre est une poudre à base de PEKK avec un pourcentage massique en motif téréphtalique par rapport à la somme des motifs téréphtalique et isophtalique de 55 à 65%, le traitement thermique peut être mis en œuvre à une température de 180°C à 220°C.

Les granulés sont ensuite broyés en poudre jusqu'à obtenir une poudre ayant une distribution de tailles de particules avec un diamètre médian D50 allant de 40 à 120 micromètres. Les granulés selon l'invention sont plus cassants que des granulés de PAEK(s) incorporant des fibres de carbone (à même taux volumique de charge) : l'étape de broyage est de ce fait facilitée. En outre, les granulés de PAEK(s) incorporant une charge, avantageusement du talc, et ayant un d'50 inférieur ou égal à 5 micromètres sont généralement beaucoup moins abrasifs lors du broyage que les granulés de PAEK(s) incorporant des fibres de carbone. Le broyage peut être mis en œuvre à une température inférieure à -20°C, préférentiellement à une température inférieure à - 40°C, par refroidissement par azote liquide, ou dioxyde de carbone liquide, ou carboglace, ou hélium liquide. Le broyeur utilisé est avantageusement un broyeur à broches, notamment un broyeur à broches à contre-rotation, ou encore un broyeur à impacts, tel un broyeur à marteaux, ou encore un broyeur tourbillonnant. Le broyeur peut être équipé d'un tamis sur lequel sont envoyées les particules broyées, les particules traversant le tamis ayant la taille désirée. Les particules retenues par le tamis peuvent être reconduites vers le broyeur pour subir un broyage plus long.

**Poudres**

Le rapport massique de la au moins une charge sur le au moins un PAEK peut être de de 1:9 à 1:1. Pour un rapport massique inférieur à 1:9, le gain des propriétés mécaniques, notamment l'augmentation de la valeur du module d'élasticité, d'un objet fabriqué à partir de la poudre, n'est généralement pas substantiel par rapport à un objet fabriqué à partir de poudre de PAEK non chargée. Pour un rapport massique supérieur à 1:1, l'objet fabriqué à partir de la poudre est généralement trop cassant. Le rapport massique de la au moins une charge sur le au moins un PAEK est avantageusement de 1:4 à 3:7.

Le rapport massique de la au moins une charge sur le au moins un PAEK peut également être de 3:7 à 2:3, ou encore de 2:3 à 1:1.

Le(s) PAEK(s) et la/les charge(s) représentent ensemble au moins 60%, ou au moins 70%, ou au moins 80%, ou au moins 85%, ou au moins 90%, ou au moins 92.5%, ou au moins 95%, ou au moins 97.5%, ou au moins 98%, ou au moins 98.5%, ou au moins 99% ou au moins 99.5%, ou 100% du poids total de la poudre.

En plus du/des PAEK(s) et de la / des charge(s), la poudre peut comprendre un autre polymère n'appartenant pas à la famille des PAEKs, notamment d'autres polymères thermoplastiques.

La poudre peut également comprendre des additifs. Parmi les additifs, on peut citer les agents d'écoulement, les

agents stabilisants (lumière, en particulier UV, et chaleur), les azurants optiques, les colorants, les pigments, les additifs absorbeurs d'énergie (dont absorbeurs d'UV). Les additifs représentent généralement moins de 5% en poids du poids total de poudre, de préférence représentent moins de 1% en poids du poids total de poudre.

## Utilisation des poudres

Les poudres selon l'invention peuvent être utilisées dans de nombreuses applications, dont les applications non-exhaustives ci-dessous.

Les poudres selon l'invention peuvent être utilisées dans des procédés de construction d'objets couche-à-couche par frittage provoqué par rayonnement(s) électromagnétique(s). Un procédé de frittage par rayonnement infrarouge et par rayonnement laser est illustré par la figure 1 et a déjà été décrit dans la section traitant de l'art antérieur.

Les poudres selon l'invention peuvent également être utilisées dans des procédés de revêtements de surfaces métalliques. Différents procédés peuvent être utilisés pour à la fin obtenir un revêtement sur des pièces métalliques. On peut citer le trempage dans le lit fluidisé pour lequel la pièce métallique est chauffée puis trempée dans le lit de poudre en fluidisation. Il est également possible de réaliser un poudrage dit électrostatique (poudre chargée poudrée sur pièce métallique reliée à la terre), dans ce cas un post traitement thermique est réalisé pour réaliser le revêtement. Une alternative est de réaliser le poudrage sur une pièce préalablement chauffée, ce qui permet d'éliminer le traitement thermique après poudrage. Enfin, il est possible de réaliser un poudrage à la flamme, dans ce cas la poudre est pulvérisée fondue sur une pièce métallique éventuellement préchauffée.

Les poudres selon l'invention peuvent également être utilisées dans des procédés de compression de poudres. Ces procédés sont en général utilisés pour réaliser des pièces épaisses. Dans ces procédés, la poudre est d'abord chargée dans un moule, compactée puis il y a fusion de la poudre pour réaliser la pièce. Enfin, un refroidissement adapté est réalisé (souvent assez lent) pour s'affranchir des contraintes internes dans la pièce.

## Données expérimentales

Les poudres des exemples ci-dessous ont été fabriquées par compoundage (extrusion-granulation) de différentes compositions, traitement thermique puis broyage.

Le compoundage a été mis en œuvre sur une bivis « Labtech » ayant un diamètre de vis de 26mm et rapport L/D de 40, avec un profil de température plat à 350°C et une vitesse de vis de 400 tours par minutes. Des granulés ont été obtenus de longueur égale à environ 2mm.

Dans le cas de la fabrication de poudres chargées (fibres de carbone ou talc), les charges sont introduites durant le compoundage par gavage latéral. Les granulés obtenus sont qualifiés de « chargés ».

Les granulés ont ensuite été traités thermiquement pendant 9h à 180°C.

Enfin, les granulés traités thermiquement ont été broyés dans un broyeur cryogénique à marteaux Mikropull 2DH® refroidi par de l'azote liquide, le broyeur étant de plus équipé d'une grille avec trous ronds de 500 microns.

### Exemple 1 (comparatif)

La première composition utilisée est un poly-éther-cétone-cétone ayant une proportion massique de motif T par rapport à la somme des motifs T et I de 60 %, ayant un indice de viscosité de 0,75 dl/g à 25°C, dans une solution aqueuse d'acide sulfurique à 96% en masse, selon la norme ISO 307 : 2019 appliquée à un PAEK. Ce poly-éther-cétone-cétone est commercialisé par la société ARKEMA sous le nom de Kepstan®.

Les granulés obtenus avec la composition selon l'exemple 1 ont pu être broyés jusqu'à obtenir un D50, mesuré à l'aide d'un diffractomètre Malvern Mastersizer 2000®, de 500 microns.

### Exemple 2 (comparatif)

La deuxième composition utilisée est constituée du poly-éther-cétone-cétone selon l'exemple 1 et de fibres de carbone, les fibres de carbones représentant 23% en poids de la composition.

Les fibres de carbone utilisées ont été des fibres Tenax®-A, de type « HT M100 » c'est-à-dire avec des longueurs de fibres comprises entre 60 micromètres et 100 micromètres.

Les granulés obtenus avec la composition selon l'exemple 2 ont pu être broyés jusqu'à obtenir un D50, mesuré à l'aide d'un diffractomètre Malvern Mastersizer 2000®, de 160 microns.

### Exemple 3 (selon l'invention)

La troisième composition utilisée est constituée du poly-éther-cétone-cétone selon l'exemple 1 et de talc Jetfine®

0.7C, commercialisé par la société IMERYS, le talc représentant 30% en poids de la composition (afin d'assurer une proportion volumique de charge équivalente à celle de l'exemple 2).

Le talc Jetfine® 0.7C a un d'50, mesuré sur Sedigraph III Plus®, de 0,7 microns et un D'50, mesuré sur un diffractomètre Malvern Mastersizer 2000®, de 2,5 microns, soit un coefficient de forme C égal à : 2,6.

Les granulés obtenus avec la composition selon l'exemple 3 ont pu être broyés jusqu'à obtenir un D50, mesuré à l'aide d'un diffractomètre Malvern Mastersizer 2000®, de 120 microns.

**Exemple 4 (selon l'invention)**

La troisième composition utilisée est constituée du poly-éther-cétone-cétone selon l'exemple 1 et de talc « Steaplus® HAR T77 » commercialisé par la société IMERYS, le talc représentant 30% en poids de la composition (afin d'assurer une proportion volumique de charge équivalente à celle de l'exemple 2).

Le talc Steaplus® HAR T77 a un d'50, mesuré sur Sedigraph III Plus®, de 2.2 microns et un D'50, mesuré sur un diffractomètre Malvern Mastersizer 2000®, de 10.5 microns, soit un coefficient de forme C égal à : 3,8.

Les granulés obtenus avec la composition selon l'exemple 4 ont pu être broyés jusqu'à obtenir un D50, mesuré à l'aide d'un diffractomètre Malvern Mastersizer 2000®, de 110 microns.

Les résultats de broyage des poudres selon les exemples 3 et 4 (selon l'invention) par rapport aux résultats de broyage des poudres selon les exemples 1 et 2 (exemples comparatifs) montrent que le broyage de granulés de PEKK incorporant une charge de talc ayant un d'50 inférieur ou égal à 5 micromètres est facilité en comparaison avec des granulés de PEKK non chargé ou des granulés de PEKK incorporant des fibres de carbone à même taux volumique de charge.

**Exemple 6 (comparatif)**

Des éprouvettes de type 1BA, selon la norme ISO 527-2 : 2012, ont été fabriquées par frittage laser de poudre de type 6002 PL®, commercialisée par la société ARKEMA, dans une imprimante EOS P800®, commercialisée par la société EOS. La poudre a un D50 égal à 50 μm, mesuré à l'aide d'un diffractomètre Malvern Mastersizer 2000®, et un indice de viscosité de 0.96 dl/g à 25°C, dans une solution aqueuse d'acide sulfurique à 96% en masse, selon la norme ISO 307 : 2019 appliquée à un PAEK. Des éprouvettes de type 1BA ont été construites selon les axes X, Y et Z à une température de construction de 290°C et avec une énergie laser pour le frittage de28 mJ/mm$^2$.

Quelle que soit l'axe de construction des éprouvettes dans la machine de frittage laser, un module élastique en traction de 4 GPa a été mesuré à 23°C, avec une vitesse de traverse de 1 mm/min, selon la norme ISO 527-2 : 2012, à l'aide d'un appareil MTS 810®, commercialisé par la société MTS Systems Corporation, équipé d'un extensomètre mécanique.

**Exemple 7 (selon l'invention)**

Des éprouvettes de type 1BA, selon la norme ISO 527-2 : 2012, ont été fabriquées par injection de la poudre selon l'exemple 3, avec une température d'alimentation de 320°C, une température de sortie de vis de 340°C, une température de moule de 80°C et un temps de cycle au plus égal à 1 minute.

Un module élastique en traction de 9 GPa a été mesuré, à 23°C, avec une vitesse de traverse de 1 mm/min, selon la norme ISO 527-2 : 2012, à l'aide d'un appareil MTS 810®, commercialisé par la société MTS Systems Corporation, équipé d'un extensomètre mécanique.

Il est considéré que la valeur de module élastique obtenue pour une éprouvette fabriquée par injection est égale, voire inférieure, à la valeur que l'on déterminerait pour une éprouvette fabriquée par frittage laser. Ainsi, si l'éprouvette avait été fabriquée par frittage laser, elle aurait assurément un module élastique en traction d'au moins 9 GPa.

**Exemple 8 (selon l'invention)**

Des éprouvettes de type 1BA, selon la norme ISO 527-2 : 2012, ont été fabriquées par injection de la poudre selon l'exemple 4, selon le même protocole que celui de l'exemple 7.

Un module élastique en traction de 9 GPa a également été mesuré, selon le même protocole que celui de l'exemple 7.

De même, si l'éprouvette avait été fabriquée par frittage laser, elle aurait assurément un module élastique en traction d'au moins 9 GPa.

Les résultats des tests mécaniques selon les exemples 7 et 8 (selon l'invention) par rapport aux résultats des tests mécaniques selon l'exemple 6 (exemple comparatif) montrent que les propriétés mécaniques d'objets obtenus à partir de poudres de PEKK incorporant une charge de talc ayant un d'50 inférieur ou égal à 5 micromètres sont supérieures à ceux obtenus à partir de poudres de PEKK non chargées.

Les résultats des tests mécaniques selon les exemples 7 et 8 laissent de plus à penser que les propriétés mécaniques d'objets obtenus à partir de poudres de PEKK incorporant une charge de talc ayant un d'50 inférieur ou égal à 5 micromètres seraient du même ordre, voire supérieures, à celles d'objets qui seraient obtenus pour des poudres chargées de fibres de carbone, comparaison faite à même taux volumique de charge. En effet, la fiche de spécifications du matériau HT-23®, commercialisé par la société Advanced Laser Materials, indique un module élastique en traction selon X de 6,5 GPa, selon Y de 6,4 GPa et selon Z de 5,8 GPa, valeurs mesurées selon l'ASTM D638. Le HT-23® est une poudre de poly-éther-cétone-cétone incorporant 23% de fibres de carbone et destiné à des applications en frittage laser dans des imprimantes comme la EOS P 500® et EOS P 810®, commercialisées par la société EOS.

## Revendications

1. Poudre ayant une distribution de tailles de particules, pondérée par le volume, mesurée par diffraction laser, selon la norme ISO 13320 : 2009, avec un diamètre médian D50 allant de 40 à 120 micromètres, comprenant au moins un poly-aryl-éther-cétone (PAEK) et au moins une charge, dans laquelle :

   - ledit au moins un poly-aryl-éther-cétone forme une matrice incorporant, au moins en partie, ladite au moins une charge, et,
   - ladite charge a une distribution de diamètres équivalents sphériques de Stokes, mesurée par rayons X avec sédimentation par gravité dans un liquide, selon la norme ISO 13317-3 : 2001, avec un diamètre médian d'50 inférieur ou égal à 5 micromètres.

2. Poudre selon la revendication 1, dans laquelle ladite charge a une distribution de diamètres équivalents sphériques de Stokes avec un diamètre médian d'50 inférieure ou égale à 2,5 micromètres.

3. Poudre selon l'une quelconque des revendications 1 ou 2, dans laquelle le rapport massique de ladite charge sur ledit au moins un PAEK est de 1:9 à 1:1; préférentiellement le rapport massique de ladite charge minérale sur ledit au moins un PAEK est de 1:4 à 3:7.

4. Poudre selon l'une quelconque des revendications 1 à 3, dans laquelle ledit au moins un PAEK et ladite au moins une charge représentent ensemble au moins 60%, ou au moins 70%, ou au moins 80%, ou au moins 85%, ou au moins 90%, ou au moins 92.5%, ou au moins 95%, ou au moins 97.5%, ou au moins 98%, ou au moins 98.5%, ou au moins 99% ou au moins 99.5%, ou 100% du poids total de la poudre.

5. Poudre selon l'une quelconque des revendications 1 à 4, dans laquelle ledit au moins un PAEK est un copolymère statistique de poly-éther-cétone-cétone (PEKK) essentiellement constitué de, préférentiellement constitué de, un motif téréphtalique et un motif isophtalique,

   le motif téréphtalique (T) ayant pour formule :

   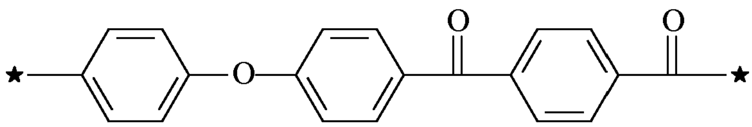

   ;

   le motif isophtalique (I) ayant pour formule :

   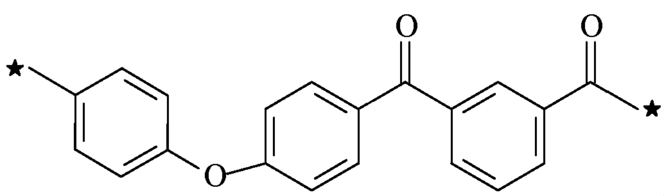

   .

6. Poudre selon la revendication 5, dans laquelle le pourcentage massique en motif téréphtalique par rapport à la somme des motifs téréphtalique et isophtalique est de 55 à 65% ;
préférentiellement le pourcentage massique en motif téréphtalique par rapport à la somme des motifs téréphtalique et

isophtalique est d'environ 60%.

**7.** Poudre selon l'une quelconque des revendications 1 à 4, dans laquelle ledit au moins un PAEK est un copolymère essentiellement constitué de, préférentiellement constitué de :

- motif(s) de formule : -Ph-O-Ph-O-Ph-C(O)- et,
- motif(s) de formule : -Ph-O-Ph-Ph-O-Ph-C(O)-,

dans lesquelles Ph représente un groupement phénylène et -C(O)- un groupement carbonyle, chacun des phénylènes pouvant indépendamment être de type ortho, méta ou para, préférentiellement de type méta ou para.

**8.** Poudre selon l'une quelconque des revendications 1 à 7, dans laquelle ladite charge est une charge minérale ; ladite charge étant préférentiellement choisie dans le groupe constitué des :

carbonate de calcium, silice, talc, wollastonite, mica, kaolin, et leur mélange;
ladite charge étant de manière davantage préférée un talc.

**9.** Poudre selon l'une quelconque des revendications 1 à 8, dans laquelle ladite charge a un coefficient de forme C supérieur ou égal à 2, ledit coefficient de forme C étant défini par la formule suivante :

$$C = \frac{D'50 - d'50}{d'50} \; ;$$

dans laquelle D'50 désigne le diamètre médian des particules de charge, pondéré en volume et mesuré selon la norme ISO 13320 : 2009 et,
dans laquelle, d'50 représente le diamètre équivalent sphérique de Stokes médian des particules de charge, mesuré par rayons X avec sédimentation par gravité dans un liquide, selon la norme ISO 13317-3 : 2001.

**10.** Procédé de fabrication de poudre comprenant les étapes constituées de :

- la fourniture d'au moins un poly-aryl-éther-cétone (PAEK) et la fourniture d'au moins une charge,
ladite au moins une charge ayant une distribution de diamètres équivalents sphériques de Stokes, mesurée par rayons X avec sédimentation par gravité dans un liquide, selon la norme ISO 13317-3 : 2001, avec un diamètre médian d'50 inférieur ou égal à 5 micromètres ;
- l'extrusion-granulation dudit au moins un poly-aryl-éther-cétone (PAEK) avec de ladite au moins une charge afin de former des granulés ; et,
- le broyage des granulés pour obtenir une poudre ayant une distribution de taille de particules, mesurée par diffraction laser, selon la norme ISO 13320 : 2009, avec un diamètre médian D50 allant de 40 à 120 micromètres.

**11.** Procédé selon la revendication 10 comprenant en outre :

- le traitement thermique des granulés avant l'étape de broyage pour permettre la cristallisation, au moins partielle, dudit au moins PAEK.

**12.** Procédé de construction d'objets couche-à-couche par frittage provoqué par rayonnement(s) électromagnétique(s), dans lequel une poudre selon l'une quelconque des revendications 1 à 10 est utilisée.

**13.** Objet susceptible d'être obtenu par le procédé selon la revendication 12 **caractérisé en ce qu'**il a, selon au moins une direction, un module élastique en traction supérieur ou égal à 7 GPa, sur une éprouvette de type 1BA, à 23°C, avec une vitesse de traverse de 1 mm/min, selon la norme ISO 527-2 : 2012.

**Patentansprüche**

**1.** Pulver mit einer volumengewichteten Partikelgrößenverteilung, gemessen mittels Laserbeugung gemäß der Norm ISO 13320: 2009, die derart beschaffen ist, dass der Medianwert des Durchmessers D50 im Bereich von 40 bis 120 Mikrometern liegt, wobei es mindestens ein Polyaryletherketon (PAEK) und mindestens einen Füllstoff umfasst,

wobei

- das mindestens eine Polyaryletherketon eine Matrix bildet, in welche der mindestens eine Füllstoff zumindest teilweise eingearbeitet ist,
- der Füllstoff eine Verteilung der Stokes-Kugeläquivalentdurchmesser, gemessen mittels Röntgenstrahlung mit Schwerkraftsedimentation in einer Flüssigkeit gemäß der Norm ISO 13317-3: 2001, hat, die derart beschaffen ist, dass der Medianwert des Durchmessers d'50 höchstens 5 Mikrometer beträgt.

**2.** Pulver nach Anspruch 1, wobei die Charge eine Verteilung der Stokes-Kugeläquivalentdurchmesser hat, die derart beschaffen ist, dass der Medianwert des Durchmessers d'50 höchstens 2,5 Mikrometer beträgt.

**3.** Pulver nach einem beliebigen der Ansprüche 1 oder 2, wobei das Massenverhältnis des Füllstoffs zu dem mindestens einen PAEK 1:9 bis 1:1 beträgt;
wobei vorzugsweise das Massenverhältnis des mineralischen Füllstoffs zu dem mindestens einen PAEK 1:4 bis 3:7 beträgt.

**4.** Pulver nach einem beliebigen der Ansprüche 1 bis 3, wobei das mindestens eine PAEK und der mindestens eine Füllstoff gemeinsam mindestens 60 %, oder mindestens 70 %, oder mindestens 80 %, oder mindestens 85 %, oder mindestens 90 %, oder mindestens 92,5 %, oder mindestens 95 %, oder mindestens 97,5 %, oder mindestens 98 %, oder mindestens 98,5 %, oder mindestens 99 %, oder mindestens 99,5 %, oder 100 % des Gesamtgewichts des Pulvers ausmachen.

**5.** Pulver nach einem beliebigen der Ansprüche 1 bis 4, wobei es sich bei dem mindestens einen PAEK um ein statistisches Copolymer aus Polyetherketonketon (PEKK) handelt, das im Wesentlichen aus einem Terephtalsäure-Baustein und einem Isophtalsäure-Baustein besteht, wobei es vorzugsweise aus diesen besteht,

wobei der Terephtalsäure-Baustein (T) die folgende Formel aufweist:

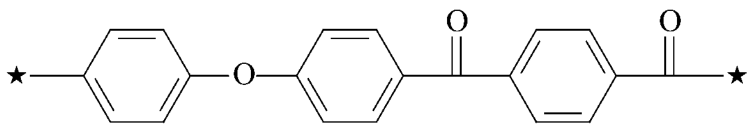

;

wobei der Isophthalsäure-Baustein (I) die folgende Formel aufweist:

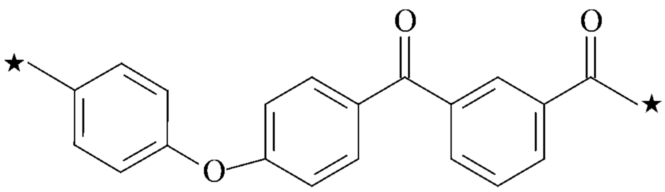

.

**6.** Pulver nach Anspruch 5, wobei der Massenprozentanteil des Terephthalsäure-Bausteins bezogen auf die Summe der Terephthalsäure- und Isophthalsäure-Bausteine 55 bis 65 % beträgt;
wobei der Massenprozentanteil des Terephthalsäure-Bausteins bezogen auf die Summe der Terephthalsäure- und Isophthalsäure-Bausteine vorzugsweise ungefähr 60 % beträgt.

**7.** Pulver nach einem beliebigen der Ansprüche 1 bis 4, wobei es sich bei dem PAEK um ein Copolymer handelt, das im Wesentlichen aus Folgendem besteht, wobei es vorzugsweise daraus besteht:

- (einem) Baustein(en) mit folgender Formel: -Ph-O-Ph-O-Ph-C(O)- und
- (einem) Baustein(en) mit folgender Formel: -Ph-O-Ph-Ph-O-Ph-C(O)-,

wobei Ph für eine Phenylengruppe und -C(O)- für eine Carbonylgruppe steht, wobei jedes der Phenylene auf unabhängige Weise vom Typ ortho, meta oder para, vorzugsweise vom Typ meta oder para, sein kann.

**8.** Pulver nach einem beliebigen der Ansprüche 1 bis 7, wobei es sich bei dem Füllstoff um einen mineralischen Füllstoff

handelt;
wobei der Füllstoff vorzugsweise aus der Gruppe ausgewählt ist, die aus den folgenden besteht:

Calciumcarbonat, Siliciumdioxid, Talkum, Wollastonit, Glimmer, Kaolin und deren Mischungen;
wobei es sich bei dem Füllstoff auf stärker bevorzugte Weise um ein Talkum handelt.

9. Pulver nach einem beliebigen der Ansprüche 1 bis 8, wobei der Füllstoff einen Formkoeffizienten C von mindestens 2 hat, wobei der Formkoeffizient C anhand der folgenden Formel definiert ist:

$$C = \frac{D'50 - d'50}{d'50};$$

wobei D'50 den Medianwert des Durchmessers der Füllstoffpartikel bezeichnet, wobei dieser volumengewichtet ist und nach der Norm ISO 13320: 2009 gemessen wird, und
wobei d'50 für den Medianwert des Stokes-Kugeläquivalentdurchmessers der Füllstoffpartikel steht, wobei dieser mittels Röntgenstrahlung mit Schwerkraftsedimentation in einer Flüssingkeit nach der Norm ISO 13317-3: 2001.

10. Pulverherstellungsverfahren, das die folgenden Schritte umfasst:

- Bereitstellen mindestens eines Polyaryletherketons (PAEK) und Bereitstellen mindestens eines Füllstoffs,

wobei der mindestens eine Füllstoff eine Verteilung der Stokes-Kugeläquivalentdurchmesser, gemessen mittels Röntgenstrahlung mit Schwerkraftsedimentation in einer Flüssigkeit gemäß der Norm ISO 13317-3: 2001, hat, die derart beschaffen ist, dass der Medianwert des Durchmessers d'50 höchstens 5 Mikrometer beträgt;

- Extrusion-Granulierung des mindestens einen Polyaryletherketons (PAEK) mit dem mindestens einen Füllstoff, um Granulatkörner zu bilden; und
- Zerkleinern der Gralulatkörner, um ein Pulver mit einer Partikelgrößenverteilung zu erhalten, welche mittels Laserbeugung gemäß der Norm ISO 13320: 2009 gemessen wird und derart beschaffen ist, dass der Medianwert des Durchmessers D50 im Bereich von 40 bis 120 Mikrometern liegt.

11. Verfahren nach Anspruch 10, das darüber hinaus Folgendes umfasst:

- Wärmebehandeln der Granulatkörner vor dem Zerkleinerungsschritt, um eine zumindest teilweise Kristallisation des mindestens einen PAEK zu ermöglichen.

12. Verfahren zur schichtweisen Herstellung von Gegenständen durch eine Sinterung, welche durch elektromagnetische Strahlung bewirkt wird, wobei ein Pulver nach einem beliebigen der Ansprüche 1 bis 10 verwendet wird.

13. Gegenstand, der mittels des Verfahrens nach Anspruch 12 hergestellt werden kann, **dadurch gekennzeichnet, dass** er gemäß mindestens einer Richtung einen elastischen Zugmodul von mindestens 7 GPa bei einem Prüfstück des Typs 1BA bei 23 °C mit einer Traversengeschwindigkeit von 1 mm/min. gemäß der Norm ISO 527-2: 2012.

## Claims

1. Powder having a volume-weighted particle size distribution, measured by laser diffraction, according to the standard ISO 13320: 2009, with a median diameter D50 ranging from 40 to 120 micrometres, comprising at least one polyaryl ether ketone (PAEK) and at least one filler, in which:

- said at least one polyaryl ether ketone forms a matrix incorporating, at least partly, said at least one filler, and
- said filler has a Stokes equivalent spherical diameter distribution, measured by X-ray with gravitational liquid sedimentation, according to the standard ISO 13317-3: 2001, with a median diameter d'50 of less than or equal to 5 micrometres.

2. Powder according to Claim 1, in which said filler has a Stokes equivalent spherical diameter distribution with a median

diameter d’50 of less than or equal to 2.5 micrometres.

3. Powder according to either one of Claims 1 and 2, in which the mass ratio of said filler to said at least one PAEK is from 1:9 to 1:1;
preferentially, the mass ratio of said mineral filler to said at least one PAEK is from 1:4 to 3:7.

4. Powder according to any one of Claims 1 to 3, in which said at least one PAEK and said at least one filler together represent at least 60%, or at least 70%, or at least 80%, or at least 85%, or at least 90%, or at least 92.5%, or at least 95%, or at least 97.5%, or at least 98%, or at least 98.5%, or at least 99% or at least 99.5% or 100% of the total weight of the powder.

5. Powder according to any one of Claims 1 to 4, in which said at least one PAEK is a statistical copolymer of polyether ketone ketone (PEKK), consisting essentially of, preferentially consisting of, a terephthalic unit and an isophthalic unit,

the formula of the terephthalic unit (T) being:

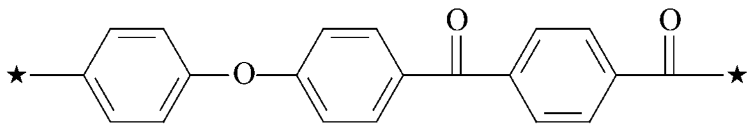

;

the formula of the isophthalic unit (I) being:

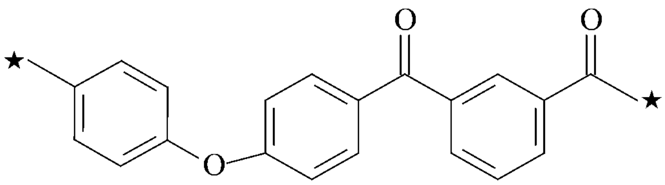

.

6. Powder according to Claim 5, in which the mass percentage of terephthalic units relative to the sum of the terephthalic and isophthalic units is from 55% to 65%;
preferentially, the mass percentage of terephthalic units relative to the sum of the terephthalic and isophthalic units is about 60%.

7. Powder according to any one of Claims 1 to 4, in which said at least one PAEK is a copolymer consisting essentially of, preferentially consisting of:

- unit(s) of formula: -Ph-O-Ph-O-Ph-C(O)-; and
- unit(s) of formula: -Ph-O-Ph-Ph-O-Ph-C(O)-;

in which Ph represents a phenylene group and -C(O)-represents a carbonyl group, each of the phenylenes possibly being, independently, of the ortho, meta or para type, preferentially of meta or para type.

8. Powder according to any one of Claims 1 to 7, in which said filler is a mineral filler;

said filler preferentially being chosen from the group consisting of: calcium carbonate, silica, talc, wollastonite, mica, kaolin, and a mixture thereof;
said filler more preferably being a talc.

9. Powder according to any one of Claims 1 to 8, in which said filler has a shape coefficient C of greater than or equal to 2, said shape coefficient C being defined by the following formula:

$$C = \frac{D'50 - d'50}{d'50} ;$$

in which D’50 denotes the volume-weighted median diameter of the filler particles, measured according to the

standard ISO 13320: 2009 and
in which d'50 denotes the median Stokes equivalent spherical diameter of the filler particles, measured by X-ray with gravitational liquid sedimentation, according to the standard ISO 13317-3: 2001.

**10.** Powder manufacturing process comprising the steps consisting in:

- supplying at least one polyaryl ether ketone (PAEK) and supplying at least one filler,
said at least one filler having a Stokes equivalent spherical diameter distribution, measured by X-ray with gravitational liquid sedimentation, according to the standard ISO 13317-3: 2001, with a median diameter d'50 of less than or equal to 5 micrometres;
- extrusion-granulation of said at least one polyaryl ether ketone (PAEK) with said at least one filler so as to form granules; and
- milling of the granules to obtain a powder having a particle size distribution, measured by laser diffraction, according to the standard ISO 13320: 2009, with a median diameter D50 ranging from 40 to 120 micrometres.

**11.** Process according to Claim 10, also comprising:

- the heat treatment of the granules before the milling step to enable at least partial crystallization of said at least PAEK.

**12.** Process for the layer-by-layer construction of objects by electromagnetic radiation-mediated sintering, in which a powder according to any one of Claims 1 to 10 is used.

**13.** Object which may be obtained via the process according to Claim 12, **characterized in that** it has, in at least one direction, a tensile elastic modulus of greater than or equal to 7 GPa, on a specimen of 1BA type, at 23°C, with a travelling speed of 1 mm/minute, according to the standard ISO 527-2: 2012.

[Fig. 1]

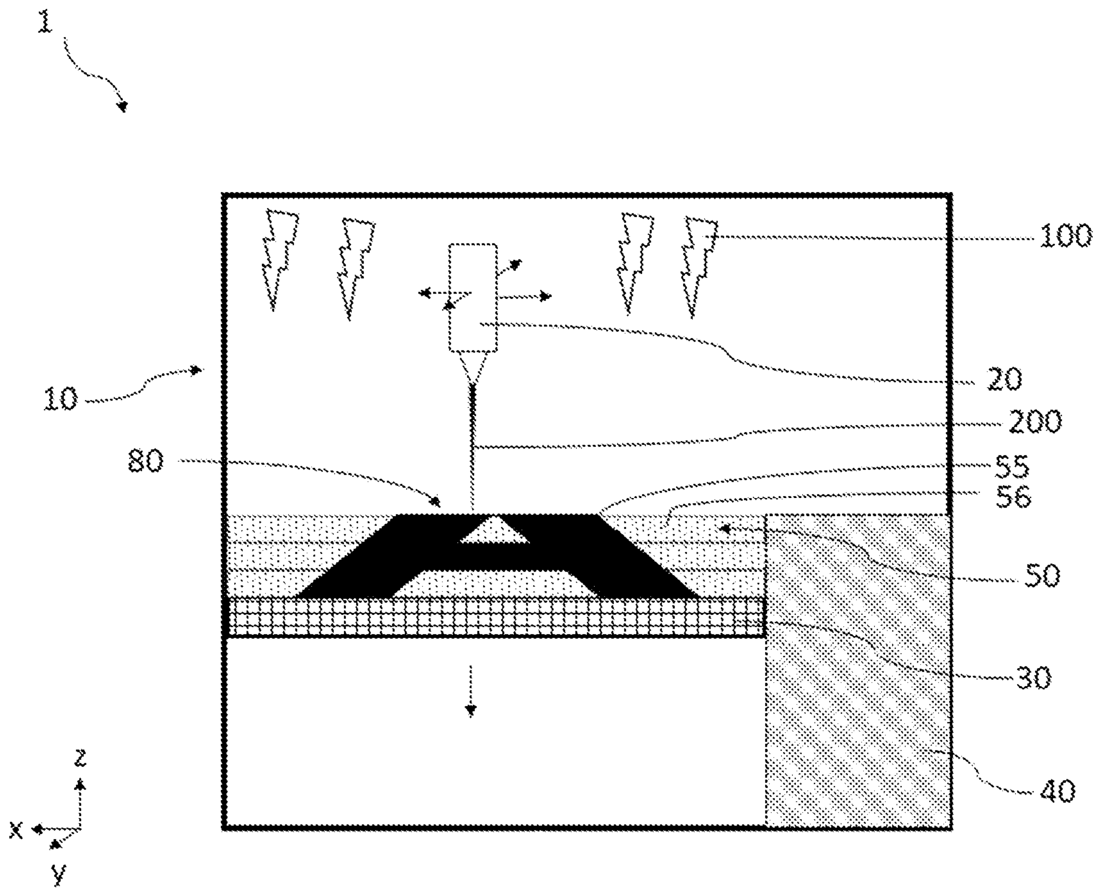

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 20180201783 A
- US 20050207931 A